# EUROPEAN PATENT APPLICATION

(11) **EP 4 421 670 A2**
(43) Date of publication of application: **28.08.2024**
(21) Application number: 24158732.8
(22) Date of filing: 20.02.2024
(51) Int. Cl.: G06F 21/64, H04L 9/32, H04L 9/00

(54) **BLOCKCHAIN MIDDLEWARE METHODS AND SYSTEMS BASED ON ZERO-KNOWLEDGE PROOF**

(30) Priority: 22.02.2023 US 202363447615 P; 03.03.2023 US 202363449812 P; 25.12.2023 US 202363614662 P; 19.01.2024 US 202463623076 P; 15.02.2024 US 202418443197
(71) Applicant: Wang, Jiatian, Los Altos Hills CA 94022 (US); Yu, Xiaohang, Beijing (CN)
(72) Inventor: Wang, Jiatian, Los Altos Hills CA 94022 (US); Yu, Xiaohang, Beijing (CN)
(74) Representative: Script Intellectual Property LLP

(57) **Abstract**

Embodiments of the present disclosure are directed to systems and methods for a zero-knowledge (zk) oracle (zkOracle) system that executes customized computation code for blockchain applications and secure the execution result by providing one or more zero-knowledge proofs (zkp). The disclosure provides a zkMiddleware structure (or blockchain middleware) and how zero-knowledge proofs can be applied for verifying blockchain states. This in turn enables data collection, verification, and process capabilities for blockchain-based applications by establishing credibility and trust based solely on verifiable blockchain technologies, computuations, and underlying mathematics.

## Description

### CROSS REFERENCE TO RELATED APPLICATIONS

This application claims priority to and the benefit of U.S. Provisional Application Ser. No. 63/447,615 entitled "Blockchain Middleware Methods and Systems Based on Zero-Knowledge Proof," filed on 22 February 2023, U.S. Provisional Application Ser. No. 63/449,812 entitled "Blockchain Middleware Methods and Systems Based on Zero-Knowledge Proof," filed on 3 March 2023, U.S. Provisional Application Ser. No. 63/614,662 entitled "Blockchain Middleware Methods and Systems Based on Zero-Knowledge Proof," filed on 25 December 2023, and U.S. Provisional Application Ser. No. 64/023,351 entitled "Blockchain Middleware Methods and Systems Based on Zero-Knowledge Proof," filed on 19 January 2024, the disclosures of which are incorporated herein by reference in their entireties.

This application relates to a concurrently filed, co-pending application U.S. patent application Ser. No. 18,443,217, entitled "Blockchain Middleware Methods and Systems Based on Zero-Knowledge Proof With Recursive Prover" by Jiatian Wang and Xiaohang Yu, owned by the applicants of this application and incorporated herein by reference.

### BACKGROUND

### Technical Field

The present disclosure generally relates to blockchain technologies and, more particularly blockchain middleware systems with zero-knowledge proof.

### Background Art

Current solutions in conducting credible verification of the correctness, validity, and availability of the source, processing, and delivery of blockchain data generally are divided in two types. The first type is generally known as "trust endorsement" in the context of a centralized scenario. Social credit such as business reputation is used to guarantee data credibility through trust endorsement and other methods. The second type is referred to as "reward and punishment incentives" in the contest of a decentralized scenario. A certain degree of credibility is maintained through a reward and punishment mechanism linked to economic incentives, i.e., rewarding honest participants and punishing evil or inaction participants. Although "trust endorsement" and "reward and punishment incentives" are widely used in the blockchain industry, both of these two conventional solutions have clear shortcomings, some of which are constrained by the degree in technological progression.

In the trust endorsement scheme, data consumers are required to unconditionally trust the collection, verification, and processing of data. There is almost no effective means for data consumers to verify the correctness of data or quantify the degree of trust. If data falsification occurs, it is more challenging for data consumers to provide evidence. Moreover, the business reputation that provides the foundation of trust has no clear punishment measures. Even if there is conclusive evidence to prove that it has falsified data, it is difficult for the falsifying party to be punished accordingly as well as changing the status quo.

In the reward and punishment incentive plan, credibility can only be maintained at a certain level (within the scope of rewards and punishments). When the benefits brought by data forgery are greater than the rewards and punishments, the incentives for rewards and punishments become invalid, and the possibility of data forgery increases as the benefits brought by forgery increase. Large data falsification is likely to occur when there is considerable benefit. Reward and punishment serve as a post-event punishment, i.e., the credibility of data cannot be guaranteed before the data is provided to consumers and has actual effects.

Accordingly, it is desirable to have methods and systems to provide more reliable data credible verification schemes in cryptography and blockchain technologies.

### SUMMARY OF THE DISCLOSURE

Embodiments of the present disclosure are directed to systems and methods for a zero-knowledge (zk) oracle (zkOracle) system that executes customized computation code for blockchain applications and secure the execution result by providing one or more zero-knowledge proofs (zkp). The disclosure provides a zkMiddleware structure (or blockchain middleware) and as to how zero-knowledge proofs can be applied for verifying blockchain states. This in turn enables data collection, verification, and process capabilities for blockchain-based applications by establishing credibility and trust based solely on verifiable blockchain technologies, computations, and underlying mathematics.

In some embodiments as described herein, the present disclosure provides a succinct zero-knowledge proof, which converts data processing computation into mathematical logics such as polynomial equations and generating a proof. Proof size and the complexity of verification computation do not increase with the complexity of the problem being proved. Another feature of the present disclosure is a data processing module, which characterizes the steps for on-chain data processing (for the purpose of verification): data pairing verification, data cleaning, custom computation. Still another feature is a prover and verifier interaction, which characterizes the relationship and interactions between the prover and the verifier to eliminate unnecessary computation redundancy, reducing the need for on-chain data, and realizing a shorter proof time. Moreover, a further feature is a prover and core circuit, which characterizes the use of a core circuit in the prover with two core components: a consensus attestation and a block attestation to realize off-chain verification. For consensus attestation and block attestation, the present disclosure provides one or more methods for computation that involve primitives such as a recursive proof. Furthermore, a verifier characterizes what is included and specify several types, such as a verifier for general knowledge within zkp.

zkMiddleware applied to the blockchain, which provides flexible and credible data collection, verification, and processing capabilities for blockchain-based applications, and establishes credibility based on rigorous validated based on mathematical formulas.

In one embodiment, a first feature of the present disclosure is directed to a method and a system for building a decentralized and permissionless zkOracle network, aiming to allow anyone to run a zkOracle prover and contribute to the decentralized zkOracle service.

In one embodiment, a second feature of the present disclosure is directed to a method and a system for building the zk circuit for all Ethereum on-chain data, which enables the use of zkOracle service to use native and real-time Ethereum on-chain data.

In one embodiment, a third feature of the present disclosure is directed to a method and a system to enable proving the historical Ethereum data, which is applicable to both on-chain and off-chain scenarios.

In one embodiment, a fourth feature of the present disclosure is directed to a method and a system for providing the ability to assemble zk circuits and generating zk proof for customized computation (note that previous applications support just a zk circuit for pre-defined and fixed logic in a convention solution).

In one embodiment, a fifth feature of the present disclosure is directed to a method and a system to provide a way to verify a zk proof as well as the data being used as provided by the zkOracle provers. After finalizing the workflow of zkOracle by verifying the proof, the present disclosure provides a method and a system as to how to use the data provided by the zkOracle and secured by the zk proof. In this embodiment, the present disclosure is directed to the zkOracle specific verifier (not a general zk verifier).

In one embodiment, a sixth feature of the present disclosure is directed to a method and a system to enable a decentralized way to generate a zk proof, supporting the concept of a "decentralized" zkOracle network, thereby reducing the threshold for normal users to participate in the proving procedure and contributing to the zkOracle network.

In a first aspect of the disclosure directed to a zkOracle prover circuit architecture, broadly stated, a system, comprises a consensus attestation circuit (310) for enforcing a first constraint set between an historical block hash and a newest block hash; a chain state attestation circuit (320), coupled to the consensus attestation circuit, for enforcing a second constraint set between the newest block hash and block events and states; a customized computation attestation circuit (330) for enforcing a third constraint set between block events and states and resulting data; and an aggregation circuit (340), communicatively coupled to the consensus attestation circuit, the chain state attestation circuit, and the customized computation attestation circuit for aggregating a plurality of proofs generated from the consensus attestation circuit, the chain state attestation circuit, and the customized attestation circuit. In addition, a method comprises receiving blockchain data; determining at least one constraint set of the received blockchain data; generating at least one proof, each proof associated with a constraint set in the at least one constraint set; and aggregating the one or more proofs into a single proof for processed blockchain data derived from the received blockchain data.

In a second aspect of the disclosure directed to a chain state prover circuit and method, a system comprises a state variable attestation circuit (530) for enforcing at least one first constraint set between at least one target event and a block hash, and generating a state subproof; an event attestation circuit (520) for enforcing at least one second constraint set between at least one state variable and the block hash, and generating an event subproof; and a transaction attestation circuit (540) for enforcing at least one third constraint set between a target transaction and the block hash, and generating a transaction subproof. The state variable attestation circuit, the event attestation circuit, and the transaction attestation circuit may generate a chain state proof, the chain state proof including the event subproof, the state subproof, and the transaction proof. Each of the state variable attestation circuit, the event attestation circuit and the transaction attestation circuit may comprise a hash subcircuit and a Merkle Patricia Trie (MPT) verify subcircuit, the hash subcircuit adjusted to set at least one constraint between a block hash and a root, i.e. state root, receipt root or transaction root. The MPT verify subcircuit adapted to set at least one constraint between a root, a Merkle-Patricia Trie (MPT) proof, and a target data.
The event circuit (520) may be configured to receive inputs of the receipts root (581) and the raw receipts data (582); the state circuit (530) may be configured to receive inputs of the state root (583) and the state path proof (584); and the transaction circuit (540) may configured to receive inputs of the transaction root (585), and the raw transaction data (586). Each respective output from the event circuit (502), the state circuit (530), and the transaction circuit (540) may be sent to a chain state proof (560); and wherein the chain state proof receives three subproofs: an event proof (561) from the event circuit (520), a state proof (562) from the state circuit (530), and a transaction proof (563) from the transaction circuit (540). The system comprises a zero-knowledge system. Moreover, a zero-knowledge method comprises translating a plurality of publicly known algorithms to a circuit, the circuit having a plurality of constraint sets; and establishing a constraint set in the plurality of constraint sets for each algorithm in the publicly known algorithms.

Alternatively, the state variable attestation circuit may comprise the event attestation circuit, and the transaction attestation circuit generate an Ethereum chain state proof, the Ethereum chain state proof including the event proof, the state proof, and the transaction proof.
Each respective output from the event circuit (502), the state circuit (530), and the transaction circuit (540) is sent to an Ethereum chain state proof (560); and wherein the Ethereum chain state proof receives three subproofs: an event proof (561) from the event circuit (520), a state proof (562) from the state circuit (530), and a transaction proof (563) from the transaction circuit (540).

In a third aspect of the disclosure directed to a customized computation attestation prover, a customized computation attestation prover in a zkOracle system comprises receiving at least one customized computation code and a sequence of inputs; decoding and transforming the at least one customized computation code to assemble at least one customized circuit; and processing the sequence of inputs through the at least one customized circuit to generate a customized proof. The step of receiving the sequence of inputs may comprise at least public input and at least one witness input. The decoding and transforming step may comprise a multi-stage solution having a setup stage and a prove stage. The setup stage may comprise the zkOracle system decoding the customized computation codes and transforming the customized computation codes into at least one preprocess circuit. The prove stage may comprise the zkOracle system processing in the execution trace of the customized computation code against the public inputs and witness inputs, and then generating at least one circuit. The zkOracle system may generate at least one proof based on the circuits from the setup stage and the prove stage.

In a fourth aspect of the disclosure directed to attestation verification, an on-chain verification method for verifying the zk proof against the inputs comprises receiving on-chain data, derived data, and a zk proof for the on-chain data and the derived data; and verifying the zk proof against the on-chain data and derived data, thereby generating an output result indicating whether the on-chain data and derived data are valid or invalid. The verifying step may comprise accessing a blockchain node for (a) verifying at least one block hash associated with the on-chain data is valid and (b) executing an on-chain verification program for verifying the block hash and the derived data. Furthermore, an off-chain attestation verification method for verifying a zk proof against inputs comprises receiving a genesis block, on-chain data, derived data, and a zk proof for the on-chain data and the derived data; and verifying the zk proof against the genesis block, the on-chain data, and the derived data, thereby generating an output result indicating whether the on-chain data and derived data are consistent with the genesis block and a predefined computation code. The verifying step may comprise an off-chain verification without accessing a blockchain node, for (a) verifying at least one block hash by determining whether the block hash is consistent with the genesis block, and (b) verifying the on-chain data and the derived data are consistent with at least one valid block hash. The off-chain attestation verification may comprise verifying by one of the following means: a portable computer, a mobile device, or a browser.

In a fifth aspect of the disclosure directed to zkPoS circuit, method and architecture, a recursive prove circuit comprises a block hash linkage attestation circuit (720) enforcing at least one first constraint set between a current block hash (H) and a previous block hash (H-1) for proving whether the current block (H) hash is valid; a proof-of-stake (POS) attestation circuit (730), communicatively coupled to the block hash linkage attestation circuit, for enforcing at least one second constraint set between a predetermined block hash and the corresponding consensus data for proving whether the predetermined block hash has been approved by a proof-of-stake consensus mechanism; and a recursive prove circuit (740) communicatively coupled to the proof-of-stake (POS) attestation circuit, for enforcing at least one third constraint set for proving verification of the zero-knowledge proof of the previous block hash. The block hash linkage attestation circuit may be adapted to receive a genesis block (0) and enforce at least one first constraint set between a current block hash (0+1) and a previous block hash (0) for proving whether the current block hash is valid. The recursive prove circuit may be adapted to enforce at least one third constraint set for proving verification of the zero-knowledge proof of the previous block hash against a current block hash. The predetermined block hash may comprise the current block hash or the previous block hash. Additionally, a method for verifying a zkPoS circuit comprises receiving a genesis block (0); enforcing at least one first constraint set between a current block hash (0+1) and a previous block hash (0) for proving whether the current block hash is valid; if valid, generating0 a proof (A); iteratively repeating the recursive process, including: on a previous block (H-1), generating a first proof from a block hash linkage attestation circuit (a first circuit), a proof-of-stake (POS) attestation circuit (a second circuit), and a recursive prove circuit (a third circuit); on a current block (H), recursive prove by generating a second proof on the first, second and third circuits, including: (a) circuit X for verifying the first proof; (b) circuit Y for PoS attestation; and (c)
circuit Z for block hash linkage attestation.

In a sixth aspect of the present disclosure, a decentralized zero-knowledge proving system, comprises a first zero-knowledge module configured to receive a proving task and to divide the proving task into a plurality of subtasks; a second zero-knowledge module configured to receive the plurality of subtasks and to distribute the plurality of subtasks to a prover network; a third module configured to receive at least one subtask from the second module and to generate a proof for each subtask, the third module having a prover as part of the prover network; a fourth module configured to receive the proofs of the subtasks from the prover network, and to aggregate them into a final proof of the proving task received by the first zero-knowledge module; and a fifth module configured to incentivize the prover network to execute the third module when the prover submits a correct proof for the subtask to the fourth module within a predetermined time period.

Advantageously, the present disclosure provides blockchain solution of zk-knowledge proofs on indexing, query, data processing, and transfer while preserving trust on the blockchain, as well as removing trust assumption in conventional systems. The present disclosure further provides another advantage to enable custom-logic, verifiable data processing.

The structures and methods of the present disclosure are disclosed in detail in the description below. This summary does not purport to define the disclosure. The disclosure is defined by the claims if any. These and other embodiments, features, aspects, and advantages of the disclosure will become better understood with regard to the following description, appended claims, and accompanying drawings.

### BRIEF DESCRIPTION OF THE DRAWINGS

The disclosure will be described with respect to specific embodiments thereof, and reference will be made to the drawings, in which:
Figure 1 is an architectural diagram illustrating a zero-knowledge Oracle (zkOracle) system 100 in accordance with the present disclosure.
Figure 2 is a block diagram illustrating one embodiment of data flow process 200 of the engine that resides in the zero-knowledge zkOracle system 100 in accordance with the present disclosure.
Figure 3 is a block diagram illustrating a zkOracle circuit system 300, which is a core component in the prover 116, of the zkOracle system 100. in accordance with the present disclosure.
Figure 4 is a block diagram illustrating a zkOracle Prover System 400 in the zkOracle system 100 in accordance with the present disclosure.
Figure 5 is a block diagram illustrating a zkOracle Circuit Architecture 500 in the zkOracle system 100 in accordance with the present disclosure.
Figure 6 is a block diagram illustrating a Chain State Attestation Circuit 600 with one or more Ethereum events in the zkOracle system 100 in accordance with the present disclosure.
Figure 7 is a block diagram illustrating a Chain State Attestation Circuit 610 with one or more Ethereum states in the zkOracle system 100 in accordance with the present disclosure.
Figure 8 is a block diagram illustrating a Chain State Attestation Circuit 620 with one or more Ethereum events in the zkOracle system 100 in accordance with the present disclosure.
Figure 9 is a block diagram illustrating a first embodiment of the Consensus Attestation Circuit 700 in the zkOracle system 100 in accordance with the present disclosure.
Figure 10 is a block diagram illustrating one embodiment of a consensus attestation workflow 800 (the term "workflow" also referred to as "process" or "method") for the consensus attestation circuit 700 in the zkOracle system 100 in accordance with the present disclosure.
Figure 11 is a block diagram illustrating a second embodiment of the Consensus Attestation 700 in the zkOracle system 100 in accordance with the present disclosure.
Figure 12 is a block diagram illustrating one embodiment of a verifier with a witness input and a public input feeding into the prover in accordance with the present disclosure.
Figure 13 is a block diagram illustrating a process 800 (or workflow 800, or method 800) for Applications in the zkOracle system 100 in accordance with the present disclosure.
Figure 14 is a block diagram illustrating a process 840 (or workflow 840, or method 840) for one or more verifiers in the zkOracle system 100 in accordance with the present disclosure.
Figure 15 is a block diagram illustrating a process 860 (or workflow 860, or method 860) for the automator 126 in the zkOracle system 100 in accordance with the present disclosure.
Figure 16 is a block diagram illustrating a process 880 (or workflow 880 ,or method 880) for the indexer 124 in the zkOracle system 100 in accordance with the present disclosure.
Figure 17 is a block diagram illustrating an example of a computer device on which computer-executable instructions to perform the blockchain methodologies discussed herein may be installed and executed.

### DETAILED DESCRIPTION

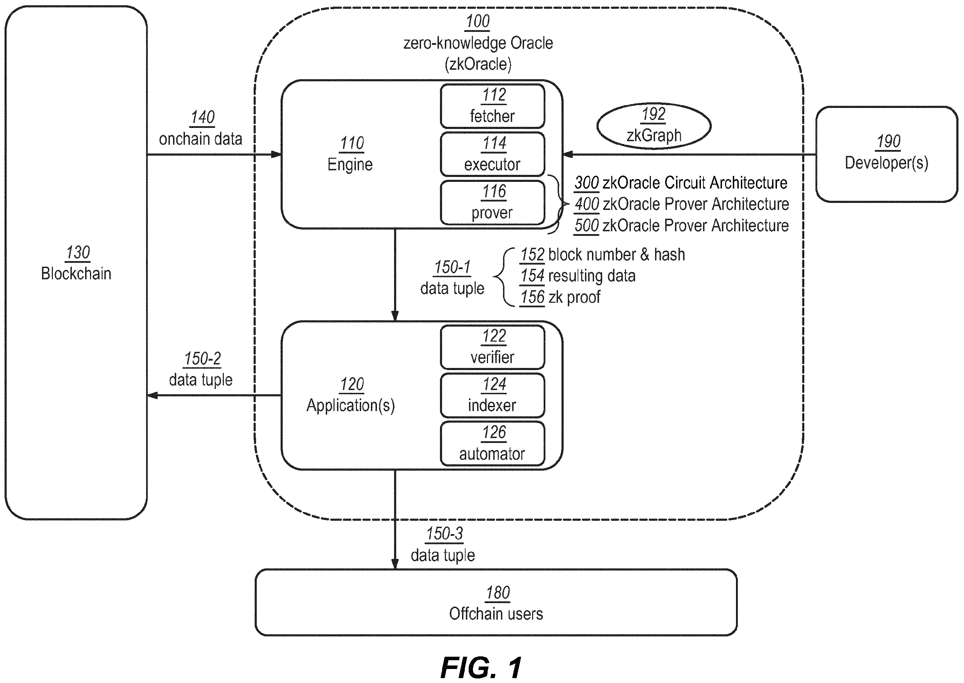

A description of structural embodiments and methods of the present disclosure is provided with reference to FIGS. 1-17. It is to be understood that there is no intention to limit the disclosure to the specifically disclosed embodiments, but that the disclosure may be practiced using other features, elements, methods, and embodiments. Like elements in various embodiments are commonly referred to with like reference numerals.

The following definitions apply to the elements and steps described herein. These terms may likewise be expanded upon.

*Attestation* (also referred to as "Prove") - for a blockchain to reach a consensus on a transaction, validators attest that the chain's recent and upcoming blocks are accurate. Therefore, blockchain attestation refers to a vote made by each validator to reach a consensus as to whether to approve a transaction.

*Circuit* - (also referred to "Circuit", circuit" or "zk circuit") in one embodiment, the term "circuit" in this patent disclosure refers an "arithmetic circuit" is essentially a set of polynomial equations over a finite field in blockchain technologies. See also, https://www.cs.utexas.edu/^{~}isil/zkap.pdf and https://en.wikipedia.org/wiki/Zero-knowledge_proof, which are incorporated herein by reference. See also the definition of "zk circuits" in this section.

*Data processing module* - refers to defining the steps for on-chain data processing (for example for the purpose of verification): data pairing verification, data cleaning and custom computation.

*Prover and core circuit* - refers to defining the use of a core circuit in prover with two core components: consensus attestation and block attestation to realize off-chain verification. For consensus attestation and block attestation, novel methods are conceived for computation that involve primitives such as recursive proof.

*Prover and verifier interaction* - refers to defining the relationship and interaction between a prover and a verifier to eliminate unnecessary computation redundancy, reduce the need for on-chain data, and realize shorter proof time.

*Succinct zero-knowledge proof (zkp)* - refers to converting data processing computation into one or more mathematical logics such as polynomial equations and generating a proof. Proof size and the complexity of verification computation do not increase with the complexity of the problem being proved. In one embodiment, note that while zkp may be a common technique used in blockchain but zkp appears not to have been used for indexing, query, data processing and transfer.

Tuple - refers to storing multiple items in a single variable. In one embodiment, tuple refers to one of four built-in data types in Python used to store collections of data; the other three are List, Set, and Dictionary, all with different qualities and usage. A tuple is a collection which is ordered and unchangeable.

*Verifier* - refers to defining what is included and specify one or more types, or alternatively four types ( the term "verifier" refers to a general knowledge within zkp; in one embodiment, this term "verifier" defines whether or not circuit is included as part of zkMiddleware design Improvements, which removes trust assumption in existing systems, and enables custom-logic, verifiable data processing.)

*zk circuits (or "ZK circuit" or "circuit")* - In one embodiment, zk refers to a cryptographic technique that enables one party (the prover) to convince another party (the verifier) that they possess certain information without revealing the actual information itself.¹ zk circuits refer to mathematical constructs which apply this cryptographic technique to programs. *Id*. zk circuits allow one to prove that one ¹ https://medium.com knows something without revealing what that something is. *Id.* In another embodiment, The term, zk circuits, form a set of constraints that if satisfied, prove a computation was carried out correctly.² zk circuits are sometimes referred to as arithmetic circuits because the "gates" in the circuit are addition and multiplication over a finite field.
² https://www.rareskills.io/post/zk-circuits

*zkCompiler generated circuit* - refers to a front-end compiler and a back-end prover, where the front-end compiler comprises a program that converts (or translates) a customized logic written in a high-level programming language to a circuit intermediate representation with a zk-efficient optimization, and then the back-end prover generates a proof based on the circuit IR upon receiving a valid vector of one or more public inputs and one or more witnesses.

*zkVM generated circuit* - refers to a set of zk proving solutions. An instance of zkVM can take in arbitrary executable file, and public inputs (including the execute input/output), and witness data, generate a proof. The proof is enforcing constraints defined by executable files. An instance of zkVM chooses a specific VM architecture (e.g. WASM, MISPS, RISC-V, etc.), for example, zkWASM for instance. The executable file should preferably be consistent with the architecture that the zkVM instance supported.

Figure 1 is a system diagram illustrating a zero-knowledge Oracle (zkOracle) system 100 (also referred to as "a single zkOracle node") comprising an engine 110, one or more applications 120, and a zkGraph 192, where the zkOracle system 100 is coupled of a blockchain 130 and a plurality of offchain users 180. The zkOracle 100 is a system designed to process onchain data of any given blockchain. The zkOracle system 100 fetches onchain data 140 from the blockchain 130 and processes the onchain data 140 through the engine 110 to generate an output 150-1 to the application(s) 120. The engine 110 includes three components: a fetcher (also referred to as "a fetcher module") 112, an executor (also referred to as "an executor module") 114, and a prover (also referred to as "a prover module") 116. The prover 116 in the engine 110 includes three subcircuits: a zkOracle circuit architecture 300, a zkOracle prover circuit 400, and a zkOracle prover architecture 500.

The engine 110 receives a batch of onchain data 140 from a blockchain 130, compute the onchain data 130 through the fetcher 112, the executor 114 and the prover 116, and export an output data having the data tuple 150-1 to the one or more applications 120. The data tuple 150-1 has a current blockhash 152, a resulting data 154, and a zk proof 154. The fetcher 112 fetches the onchain data 140 and generating an output containing the block number and hash 152 (also referred to as "block number & hash 152) (as well as other auxiliary data) to the executor 114. The executor 114 computes the onchain data 140 (or the fetched data) for a customized execution based on the zkGaph 192 received from a developer(s) 190 and generates an output containing the resulting data 154 to the prover 116. The prover 116 receives an input from the executor 114 (containing the resulting data 154) and the fetcher (containing the block number and hash 152), and computes to generates a zk (zero knowledge) proof 156 for execution. The developer(s) or a user(s) 190 is able to submit (or send) one or more customized code snippets, such as zkgraph 192, for loading into the engine 110 in the zkOracle system (or zkOracle node) 100. The one or more customized code snippets can be written in any programming language. The zkGraph 192 functions as an interface between the developer(s) or user(s) 190 and the engine 110.

The one or more applications 120 comprises three components: a verifier (also referred to as "an verifier module") 122, an indexer (also referred to as "an indexer module") 124, and an automator (also referred to as "an automator module") 126. The application 120 receives an input of the data tuple 150 containing the block number and hash 152, the resulting data 154, and the zk proof 156. Each of the three components in the one or more applications 120 receives the data tuple 150-1 for respective functional processing. The verifier 122 is configured to function as a zk proof verifier that verifies the zk proof 156 against the data (in block number and hash 152 and the resulting data 154). The index 124 is configured to provide one or more option users with the data tuple 150-1 so that the one or more option users can receive the data tuple and perform the zk verify process by itself for the one or more option users to trust the resulting data 154. The automator 126 is configured to receive data tuple 150-1 and sending the data tuple 150-1 to the blackchain 130 to trigger an onchain verification process as well as a smart contract automate (like an automatic smart contract trigger service). The one or more applications 120 generate a first output containing the data tuple 150-2 to the blockchain 130, and/or generates a second output containing the data tuple 150-3 to the offchain users 180. The one or more offchain users 180 include one or more data consumers.

In one embodiment, the developers 190 are external users to the zkOracle system 100. The offchain users 180 are also external users to the zkOracle system 100.

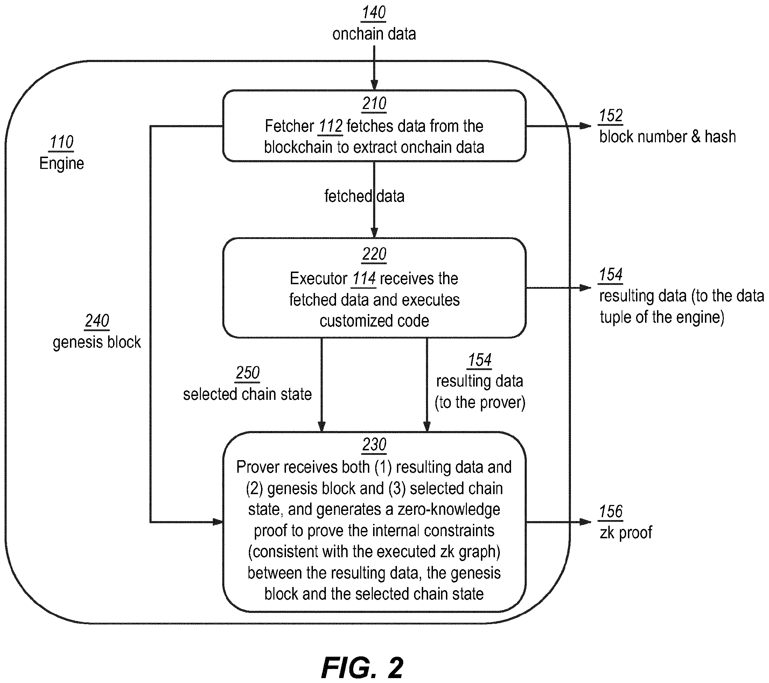

Figure 2 is a block diagram illustrating one embodiment of data flow process 200 of the engine 110 that resides in the zero-knowledge zkOracle system 100. The engine 100 receives an input of the onchain data 140, and generates three types of output data, i.e., the block number and hash 152, the resulting data 154, and the zk proof 156. At step 210, the fetcher 112 is configured to fetche the onchain data 140 from to the blockchain 130. The fetcher 112 extracts useful data from the onchain data, and sends fetched data to the executor 114. At step 220, the executor 114 is configured to receive the fetched data and executes customized code. To phrase it another way, the executor 114 is configured to receive the fetch data from the fetcher 112 and execute the zkGraph 192 as provided by the developer 190. The executor then generates a first output containing the resulting data 154 and a second output containing a selected chain state 250 (which corresponds to the zkGraph context). The selected chain state 250 is typically a subset of the fetched data.

At step 230, the prover 116 is configured to receive (1) the resulting data 154, (2) the selected chain state 250, and (3) a genesis block 240, and generates a zero-knowledge proof to prove the internal constraints (consistent with the executed zk graph) between the resulting data, the genesis block and the selected chain state. The genesis block 240 is sourced or sent from the fetcher 112. In one embodiment, the genesis block 240 means an initial block, e.g. the first block data of a blockchain system. Once a specific blockchain system that zkOracle is plugged in, then the genesis block 240 is fixed. The genesis block 240 does not change. The prover 116 generates the zero-knowledge proof to prove that the internal constraints between the resulting data 154, the genesis block 240, and the selected chain state 250. The one or more internal constraints in step 230 are consistent with the executed zkGraph 192.

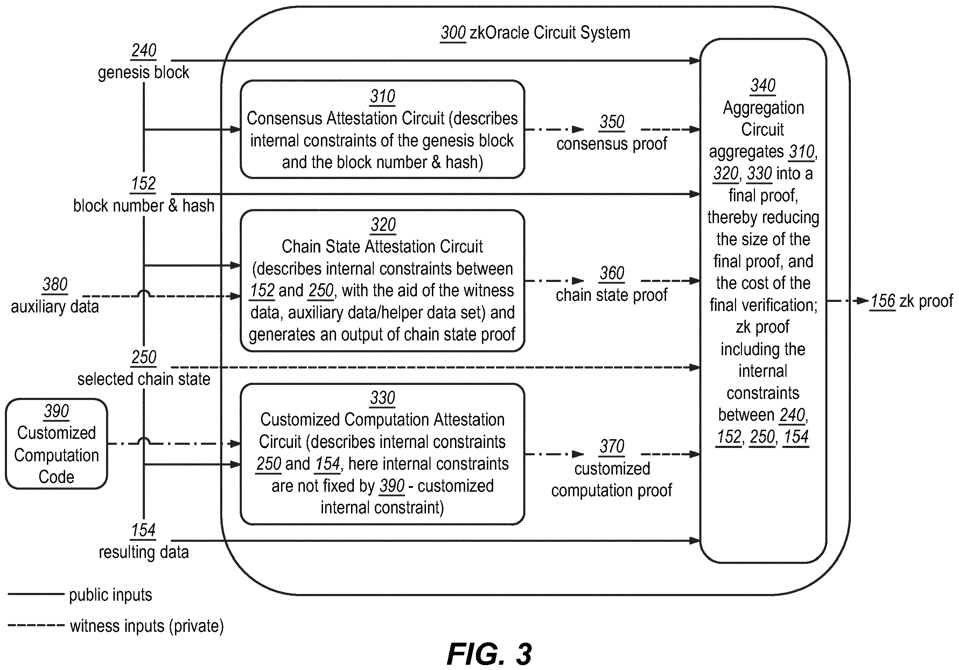

Figure 3 is a block diagram illustrating the zkOracle circuit system 300, which is a core component in the prover 116, of the zkOracle system 100. The zkOracle circuit system 300 includes four subcomponents: a consensus attestation circuit 310, a chain state attestation circuit 320, a customized computation attestation circuit 330, and an aggregation circuit 340. The zkOracle circuit system 310 is configured to describe one or more internal constraints between the block number and hash 152 and the genesis block 240 by proving the blockchain consensus process, and generates an output containing a consensus proof 350. The chain state attestation circuit 320 is configured to describe one more internal constraints between the block number and hash 152 and the selected chain state 250, with the aid of witness data 380 (also referred to auxiliary data, or helper data set), and generates an output containing a chain state proof 360.

The customized computation attestation circuit 330 is configured to describe one or more internal constraints of the selected chain state 250 and the resulting data 154. In one embodiment, the one or more internal constraints to the customized computation attestation circuit 330 are not fixed but rather defined by a customized computation code 390 - customized internal constraint. In one embodiment of comparison, the one or more internal constraints in the consensus attestation circuit 310 and the chain state attestation circuit 320 are fixed.

In one embodiment, once a blockchain system is fixed, the one or more internal constraints in the consensus attestation circuit 310 and the chain state attestation circuit 320 are fixed. As for the customized computation attestation circuit 330, the one or more internal constraints is consistent with the customized computation code 390. The customized computation attestation circuit 330 then generates an output containing customized computation proof 370.

Three subproofs (or three proofs) have been generated, the consensus proof 350 from the consensus attestation circuit 310, the chain state proof 360 from the chain state attestation circuit 320, and the customized computation proof 370 from the customized computation attestation circuit 330. The aggregation circuit 340 is configured to receive inputs of the consensus proof 350, the chain state proof 360, and the customized computation proof 370 and aggregate the three subproofs into a zk proof (or a final proof). One advantage of the zk proof 156 is to reduce the size of the final proof, which then reduces the cost of the final verification. The zk proof 156 includes the one or more internal constraints between the genesis block 240, the block number and hash 152, the selected chain state 250, and the resulting data154.

In one embodiment, the implementation of the aggregation circuit 340 is done by implementing the verification logic of the three subproofs 350, 360 and 370. The aggregation circuit 349 is consistent with the verification logic of the three aggregated subproofs 350, 360, and 370.

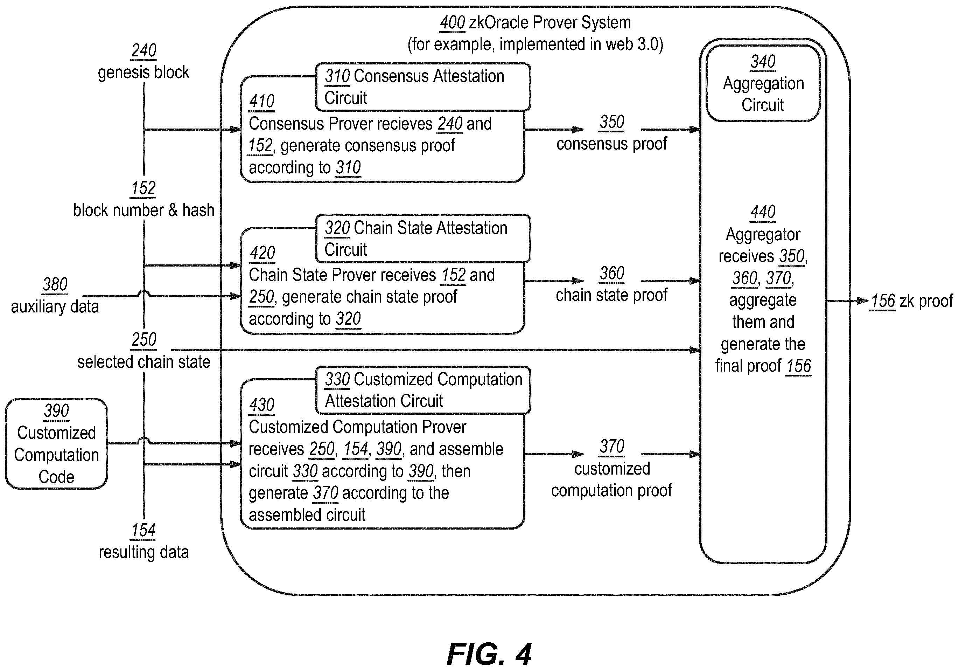

Figure 4 is a block diagram illustrating the zkOracle prover system 400 in the zkOracle system 100. The zkOracle prover system 400 includes four subcomponents: a consensus prover 410, a chain state prover 420, a customized computation prover 430, and an aggregator 440. In one embodiment, there is a general relationship between the zkOracle circuit system 300 and the provers in the zkOracle prover system 400. A prover is a component inside of a system like the zkOracle system 100. A circuit is an arithmetic concept (or an abstraction concept) that defines a prover. A circuit (or a zk circuit) describes one or more internal constraints, and a prover is a component that executes a proving process through the circuit.

Describing Figure 4 in view of Figure 3, the consensus prover 410 includes the consensus attestation circuit 310, the chain state prover 420 includes the chain state attestation circuit 320, and the customized computation prover 430 includes the customized computation attestation circuit 330. The inputs and the outputs of the consensus attestation circuit 310 in the consensus prover 410, the chain state attestation circuit 320 in the chain state prover 420, and the the customized computation attestation circuit 330 in the customized computation prover 430 are the same in Figure 4 as in Figure 3. The aggregator 440 includes the aggregation circuit 340 that receives the consensus proof 350, the chain state proof 360, the customized computation proof 370, and the three aggregated subproofs 350, 360, and 370 to generate the final proof 156.

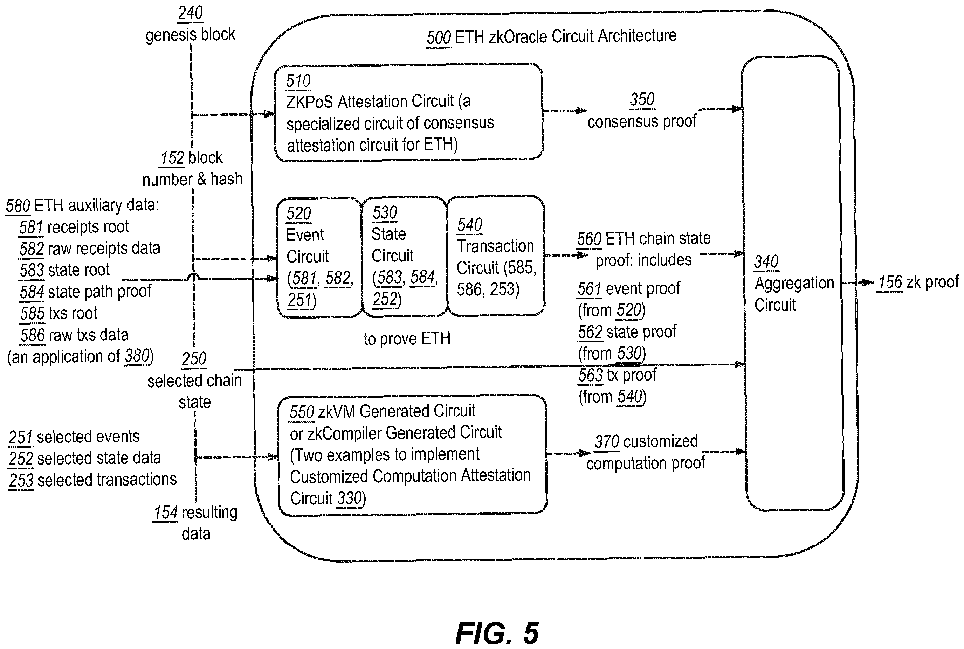

Figure 5 is a block diagram illustrating the zkOracle Circuit Architecture 500, as one embodiment of the zkOracle circuit system 300, in the zkOracle system 100. The zkOracle Circuit Architecture 500 reflects one embodiment in applying an Ethereum (ETH) use case to the zkOracle circuit system 300. To phrase it another way, the zkOracle Circuit Architecture 500 represents a system when plugging the zkOracle system 100 into Ethereum as a blockchain system. The zkOracle Circuit Architecture 500 includes four major components: (1) a ZKPoS attestation circuit 510, (2) the three chain state circuits: an event circuit 520, a state circuit 530 (also referred to as a a state variable attestation circuit), and a transaction circuit 540, (3) a zkVM Generated Circuit 550 (alternatively, a zkCompiler Generated Circuit 550), and (4) the aggregation circuit 340. The ZKPoS attestation circuit 510 is a specialized version of consensus attestation circuit. A consensus algorithm inside Ethereum is referred to as proof of stake (PoS). To implement a consensus attestation circuit for Ethereum, ZKPoS attestation circuit is selected for implementation. The three chain state circuits, the event circuit 520, the state circuit 530, and the transaction circuit 540 are specialized instances for Ethereum to prove an Ethereum chain state. Each of the three attestation circuits, i.e. the state variable attestation circuit 530, the event attestation circuit 520 and the transaction attestation circuit 540, comprises a hash subcircuit and a MPT (Merkle-Patricia Trie) verify subcircuit. The hash subcircuit is adjusted to set at least one constraint between the block hash and the root, i.e. state root, receipt root or transaction root. The MPT verify subcircuit is adapted to set at least one constraint between a root (i.e. a state root, a receipt root or a transaction root), a MPT proof, and a target data (i.e. a target state variable or an event or transaction).

An Ethereum auxiliary data 580 including the following data: a receipts root 581, raw receipts data 582, a state root 583, a state path proof 584, a transaction root (txs root) 585, and raw transaction data (raw txs data) 586. The event circuit 520 is configured to receive inputs of the receipts root 581 and the raw receipts data 582. The state circuit 530 is configured to receive inputs of the state root 583 and the state path proof 584. The transaction circuit 540 is configured to receive inputs of the transaction root 585, and the raw transaction data 586.

Each respective output from the event circuit 502, the state circuit 530, and the transaction circuit 540 is sent to an Ethereum chain state proof 560. The Ethereum chain state proof receives three subproofs. The Ethereum chain state proof 560 receives an event proof 561 from the event circuit 520, a state proof 562 from the state circuit 530, and a transaction proof 563 from the transaction circuit 540.

The zkVM Generated Circuit 550, or alternatively the zkCompiler Generated Circuit 550, provides two examples in implementing the Customized Computation Attestation Circuit 330. The zkVM Generated Circuit 550 refers to a set of zk proving solutions. An instance of zkVM takes in arbitrary executable file, and public inputs (including the execute input/output), and witness data, generates a proof. The proof is enforcing one or more constraints defined by executable files. An instance of zkVM chooses a specific VM architecture (e.g. WASM, MISPS, RISC-V, etc.) e.g. zkWASM for instance. The executable file should be consistent with the architecture that the zkVM instance supported. The zkCompiler Generated Circuit 550 refers to a front-end compiler and a back-end prover, where the front-end compiler comprises a program that converts (or translates) a customized logic written in a high-level programming language to a circuit intermediate representation with a zk-efficient optimization, and then the back-end prover generates a proof based on the circuit IR upon receiving a valid vector of one or more public inputs and one or more witnesses.

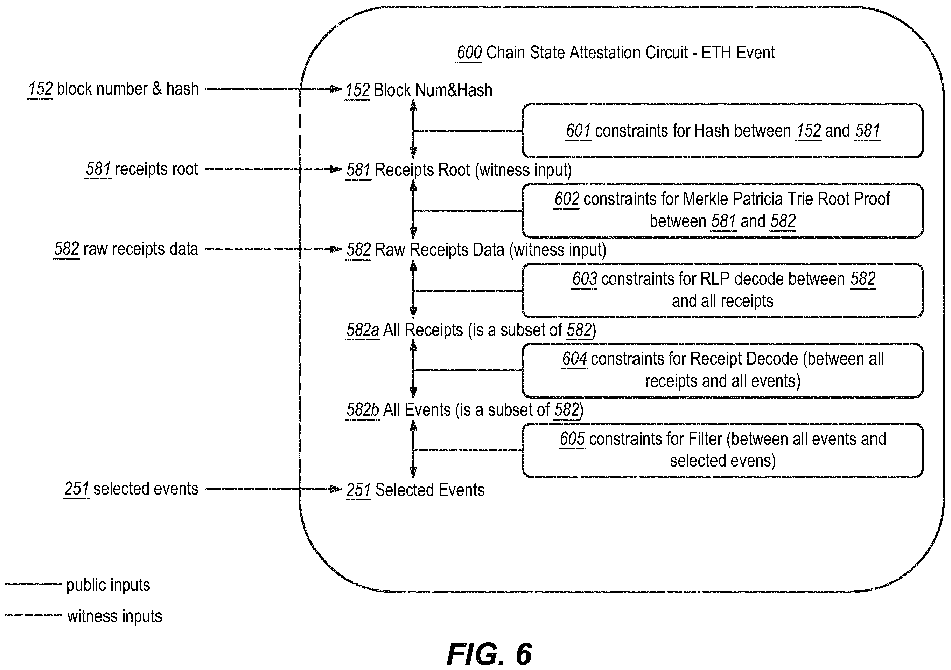

Figure 6 is a block diagram illustrating a chain state attestation circuit 600 with one or more Ethereum events in the zkOracle system 100. The chain state attestation circuit 600 (also referred to as an Ethereum Event Circuit) is an elaboration of the Event Circuit 520 as described with respect to Figure 5. The chain state attestation circuit 600 describes the one or more internal constraints between two public inputs, the block number and hash 152, and the selected events 251, as shown in solid lines. The receipts root 581 and the raw receipts data 582 (which includes all receipts 582a and all events 582b are witness inputs (or private inputs), as shown in dotted lines.

Each constraints in 601, 602, 603, 604 and 605 describe the one or more constraints between two sets of data. The one or more constraints 601 describe the one or more constraints for hash between the block number & hash 152 and the receipts root 581. The constraints 602 describe the constraints for Merkle Patricia Trie Root Proof between the receipts root (witness input) 581 and the raw receipts data (witness input) 582. The constraints 603 describe the constraints for Recursive Length Prefix (RLP) decode between the raw receipts data (witness input) 582 and all receipts. The one or more constraints 604 describe the one or more constraints for the receipt decode between all receipts and all events. The constraints 605 describe the constraints for a filter between all events and selected events. All receipts 582a are a subset (decoding result) of the raw receipts data 582. All events 582b are also a subset (decoding result) of the raw receipts data 582.

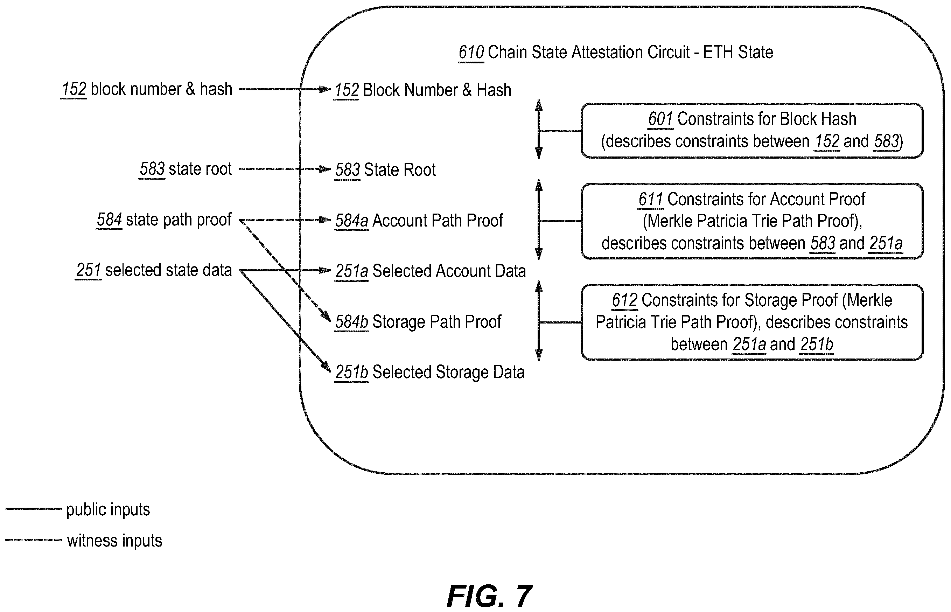

Figure 7 is a block diagram illustrating the Chain State Attestation Circuit 610 with one or more Ethereum states in the zkOracle system 100. The Chain State Attestation Circuit 610 comprises three components: (1) one or more constraints for block hash 601 describing the one or more constraints between the block number and hash 152 and the state root 583, (2) one or more constraints for account proof 611 (Merkle Patricia Trie Path Proof) that describes constraints between the state root 583 and the selected account data 251a, and (3) one or more constraints for storage proof 612 (Merkle Patricia Trie Path Proof) that describes constraints between the selected account data 251a and the selected storage data 251b.

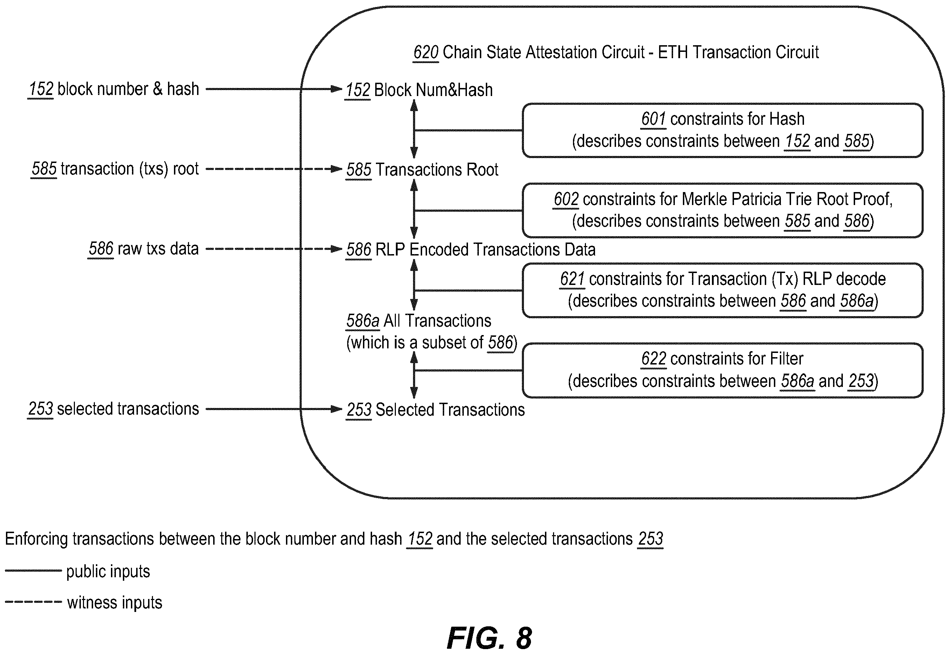

Figure 8 is a block diagram illustrating the Chain State Attestation Circuit 620 (or the Ethereum transaction circuit) with one or more Ethereum events in the zkOracle system 100. The Chain State Attestation Circuit 620 is configured to describe the constraints in 601, 602, 621 and 622 but the data inputs are between the block number and hash 152 and the selected transactions 253. The constraints in 601, 602, 621 and 622 in Figure 8 are the same as in Figure 6, but the data inputs in Figure 8 are the block number and hash 152 and the selected transactions 253, rather than between the block number and hash 152 and the selected events 251 as shown in Figure 6.

Each constraint in 601, 602, 621, 622 describes the constraints between two set of data. The one or more constraints 601 describe the one or more constraints for hash between the block number & hash 152 and the transaction root 585. The one or more constraints 602 describe the one or more constraints for transaction root 585 and the RLP encoded transaction data 586. The constraints 621 describe the constraints for the Transaction RLP decode between the RLP encoded transaction data 586 and all transactions 586a. The one or more constraints 622 describe the one or more constraints for the filter 622 between all transactions 586a and the selected event 253.

The chain state attestation circuit 620 describes the internal constraints between two public inputs, the block number and hash 152 and the selected transactions 253, as shown in solid lines. The transaction root 585, the RLP encoded transactions data 586, and all transactions 586a are witness inputs (or private inputs), as shown in dotted lines. All transactions 586a is a subset of the RLP encoded transactions data 586.

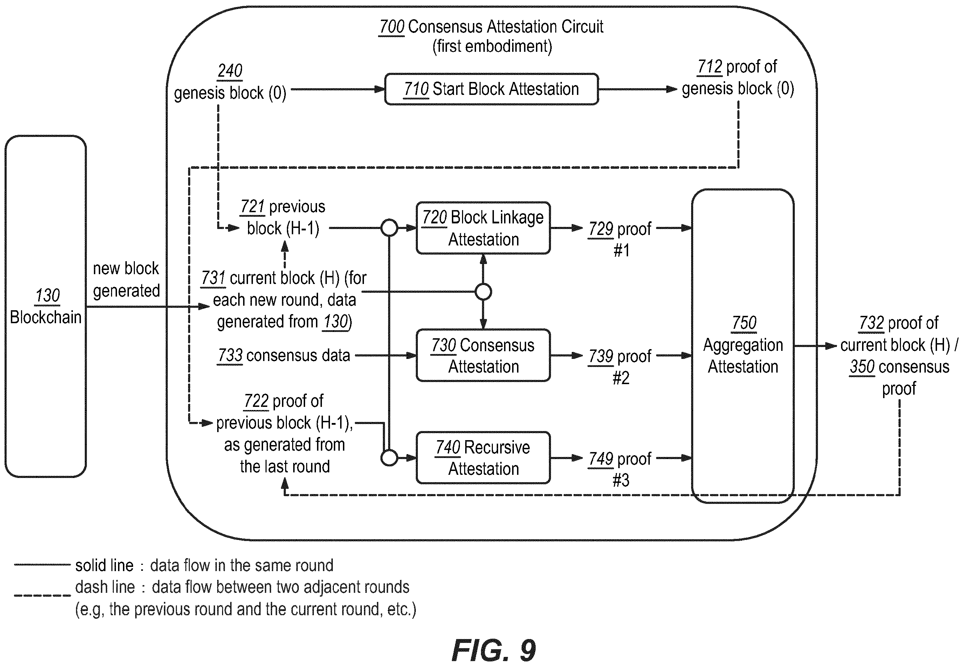

Figure 9 is a block diagram illustrating a first embodiment of the consensus attestation circuit 700 in the zkOracle system 100. The consensus attestation circuit 700 describes the constraints between a given recent block generated from the blockchain system 130 and the genesis block 240 of the blockchain system. To phrase it another way, the consensus attestation circuit 700 describes the one or more constraints between the anchor data, which is the genesis block 240 and a newly generated block data.

The consensus attestation circuit 700 comprises four blocks (or modules, or subcircuit): (1) a start block attestation (or a start block attestation subcircuit) 710, (2) a block linkage attestation (also referred to as a block linkage attestation subcircuit) 720, (3) a consensus attestation (also referred to as a consensus attestation subcircuit) 730, and (4) a recursive attestation (also referred to as a recursive attestation subcircuit) 740. The start block attestation 710 is configured to describe one or more constraints for verifying the correctness of the genesis block(0) 240. The start block attestation 710 defines how to verify that the genesis block(0) 240 is correct.

For the initial round, the start block attestation 710, which functions as an initial circuit, describes one or more constraints of the genesis block, which runs first and runs just once. The start block attestation 710 is configured to receive the genesis block (0) consensus data 240 and generates a proof of the genesis block(0) 712. The start block attestation 710 describes one or more constraints in the correctness verifications of the genesis block. For subsequent rounds, the consensus attestation circuit 700 runs just the three subcircuits: the block linkage attestation subcircuit 720, the consensus attestation subcircuit 730, and the recursive attestation subcircuit 740.

After the initial round (or the first round), the start block attestation 710 receives the genesis block (0) 240 and generates the proof of the genesis block(0) 712, where then the genesis block(0) 240 is fed into the previous block (H-1) 721, while the proof of the genesis block(0) 712 is fed into the proof of the previous block (H-1) 722. For each of the subsequent rounds (after the initial round or the first round), each of the previous block (H-1) 721 and the proof of the previous block (H-1) 722 is updated with the actual previous block, which means the actual data and proof of previous block rather than the genesis block.

The block linkage attestation 720 is configured to describe one or more constraints between the previous block and the next block (or the current block). In a blockchain system, data in a blockchain system is structured as one or more chains of blocks. Each block is cryptographically linked with the previous block. Objectively, there is a way to verify or attest the linkage that two given blocks are linked together, where one block is the previous block to another block. Similarly, the block linkage attestation 720 in the consensus attestation circuit 700 is configured to function or describe the constraints between the previous block and the current block. The block linkage attestation 720 is configured to receive a previous block (H-1) 721 and generates an output of a subproof 729 (also referred to as proof #1, or subproof #1). It is also noted that the block(1) 711 is fed into the previous block (H-1) 721 just once during the first time, where a previous block is fed into the previous block (H-1) 721 subsequently.

The consensus attestation 730 is configured to describe one or more constraints to verify the consensus data of the current block. The consensus attestation 730 receives an input of consensus data 733 to verify a current block 731, and generates a proof 739 (also referred to as proof #2, or subproof #2). An objective of the consensus attestation 730 is to prove (or verify) that the current block 731 has correct consensus by a blockchain consensus algorithm. For each round, the current block(H) 731 is fetched from the blockchain system 130. Whenever the blockchain system 130 generates a new block, then the new block data comes into the current block(H) 731 as the current block data.

The recursive attestation 740 is configured to verify the whole process recursively. Assume that a final proof has been generated for a given block (or a previous block), and when trying to prove the next block (or the current block), the input into the recursive attestation 740 is the final proof of the previous block as well as the previous block data itself. The term "final proof" referred to an aggregated proof (or proof of a current block 732); the term "final proof" is also referred to as the consensus proof 350 in Figure 3. The recursive attestation 740 is configured to receive two inputs, a proof o previous block (H-1) and the previous block (H-1) 721, and generates the subproof 949 (also referred to as proof #3, or subproof #3).

Each of the subcircuits 710, 720, 730, 740 in the consensus attestation circuit 700 generates a subproof. The start block attestation subcircuit 710 generates the subproof 712. The block linkage attestation subcircuit 720 generates the subproof 729. The consensus attestation subcircuit 730 generates the subproof 739. The recursive attestation subcircuit 740 generates the subproof 749.

The aggregation attestation 750 is configured to aggregate the previously generated three subproofs: the subproof 729, the subproof 739 and the subproof 749, and aggregate the subproofs 729, 739 and 749 collectively to generate the final proof 732. The aggregation attestation 750 does not aggregate the subproof 712 from the start block attestation 710 because the subproof of 710 functions like an initial proof.

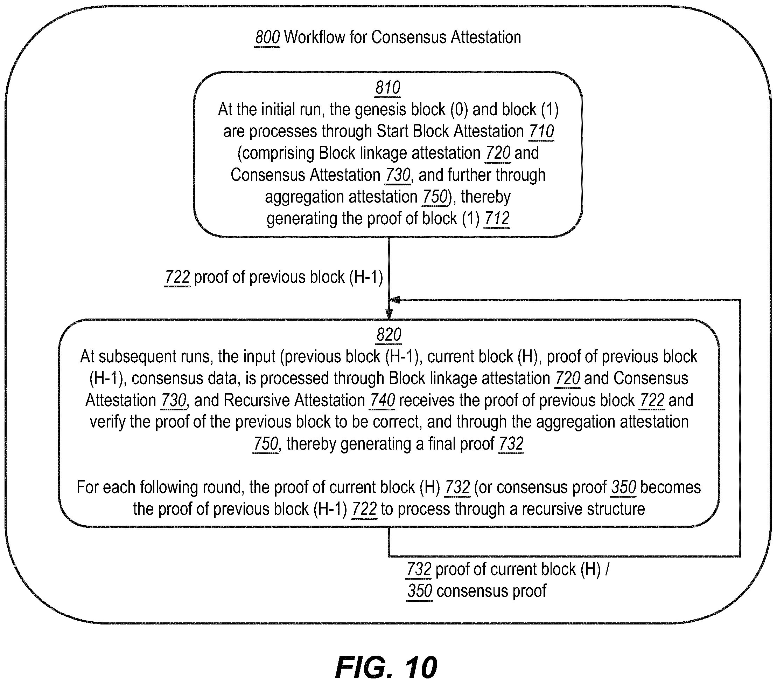

Figure 10 is a block diagram illustrating one embodiment of a consensus attestation workflow 800 (also referred to as "process" or "method") for the consensus attestation circuit 700 in the zkOracle system 100 with elaboration on the recursive portion. At step 810, during the initial run, the genesis block (0) and block (1) process through Start Block Attestation 710 (comprising Block linkage attestation 720 and Consensus Attestation 730, and further through aggregation attestation 750), thereby generating the proof of block (1) 712. At step 820, during subsequent runs, the input (previous block (H-1), current block (H), proof of previous block (H-1), consensus data, is processed through a Block Linkage Attestation 720 and a Consensus Attestation 730, and a Recursive Attestation 740 receives the proof of previous block 722 and verify the proof of the previous block to be correct, and through the aggregation attestation 750, thereby generating a final proof 732. For each of the subsequent rounds, the proof of current block (H) 732 (or 350 consensus proof) becomes the proof of previous block (H-1) 722 for processing through a recursive structure. In one embodiment, whenever a blockchain generates a new block, the recursive part is triggered continuously, given that the blockchain system continues (does not stop) and in perpetuity (is never finished).

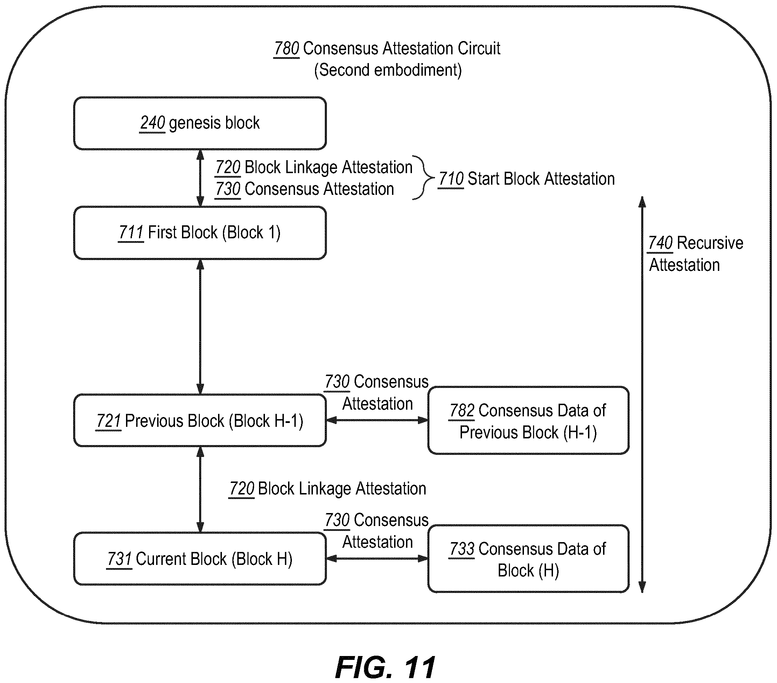

Figure 11 is a block diagram illustrating a second embodiment of the Consensus Attestation Circuit 780 in the zkOracle system 100. The start block attestation 710 is disposed between the genesis block (0) 240 and the first block (or block 1) 1711. The block linkage attestation 720 is disposed between the previous block (H-1) 721 and a current block (block H) 731. The consensus attestation 730 is disposed between the previous block (block H-1) 721 and
a consensus data of previous Block (H-1) 782. The consensus attestation 730 is also disposed between the current block (block H) 731 and a consensus data of block (H) 733. For further description of Figure 11, see also Figure 9 with the same reference numbers.

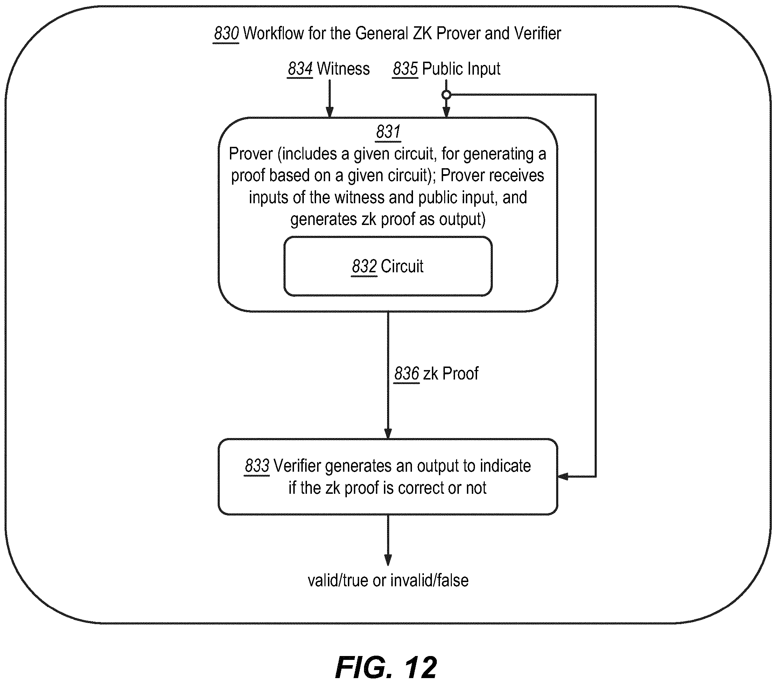

Figure 12 is a block diagram illustrating one embodiment of the process (or workflow) 830 for the general a zk prover and a verifier. In one embodiment, the proving process via a prover 831 and the verifying process via a verifier 833 represents core procedures in a zkOracle system. The prover 831 includes a given circuit 832 for generating a proof based on the given circuit 832. The prover 831 is configured to receive a witness input 834 and a public input 835, and generates a zk proof 836 at the output. The verifier 833 is configured to receive a first input containing the zk proof 836 and a second input containing the public input 835, and subsequently generateing an output to indicate whether the zk proof 836 is correct or not. To phrase it another way, the verifier 836 determines whether the zk proof 836 is valid or invalid over the public input 835.

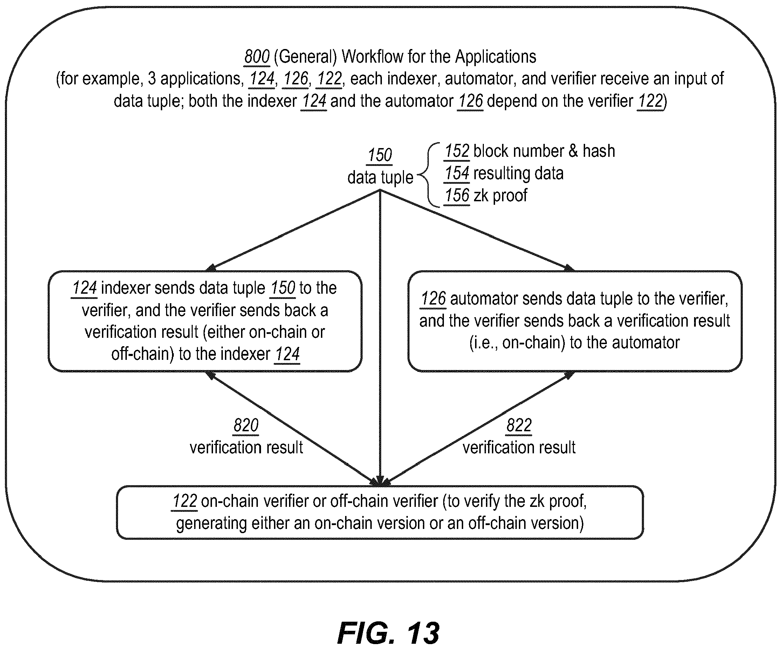

Figure 13 is a block diagram illustrating the process 800 (or workflow) for applications in the zkOracle system 100. The process 800 comprises three applications: an indexer 124, an automator 126 and a verifier 122. Each of the indexer 124, the automator 126, and the verifier 122 receives an input of the data tuple 150 from the engine 110 of the zkOracle system 100. The data tuple 150 includes a block number and the hash 152, the resulting data 154, and the zk proof 156. Each of the indexer 124 and the automator 126 interacts and depends on the verifier 122. The indexer 124 is configured to send the data tuple 150 to the verifier 122 to verify a zk proof, and the verifier 122 sends back a verification result (either on-chain or off-chain) 820 to the indexer 124. The automator is 126 configured to send data tuple 150 to the verifier 122 to verify a zk proof, and the verifier 122 sends back a verification result 822 (e.g. on-chain) to the automator 126. The verifier 122 (functioning as both an on-chain verifier or an off-chain verifier 122 is configured to verify the zk proof, generating either an on-chain version or an off-chain version. The data tuple 150 can also be sent to the verifier 122, which means that the verifier can directly consume data tuple 150 as well.

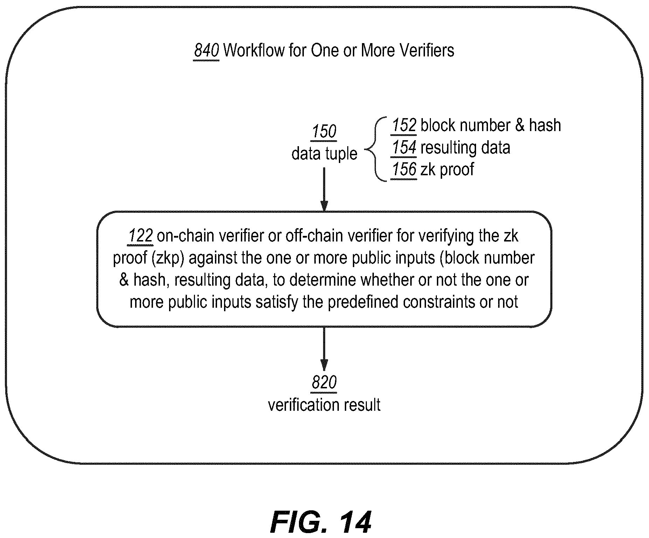

Figure 14 is a block diagram illustrating a process (or workflow) 840 for one or more verifiers 122 in the zkOracle system 100. In one embodiment, the one or more verifiers 122 have two types of verifiers, either an on-chain verifier or an off-chain verifier for verifying the zk proof (ZKP) against the one or more public Inputs (e.g. the block number & hash 152, the resulting data 154, to determine whether or not the one or more public inputs satisfy the predefined constraints). The one or more verifiers 122 is configured to receive the data tuple 150, which includes the block number & hash 152, resulting data 154, and/or the zk proof 156, and generates an output containing a verification result 820. In this embodiment, the verification result 820 is a Boolean value, i.e. true or false, or pass or fail. One of ordinary skilled in the art would recognize that other variations and modifiications to the one or more verifiers 122 can be practiced without departing from the spirits of the present disclosure.

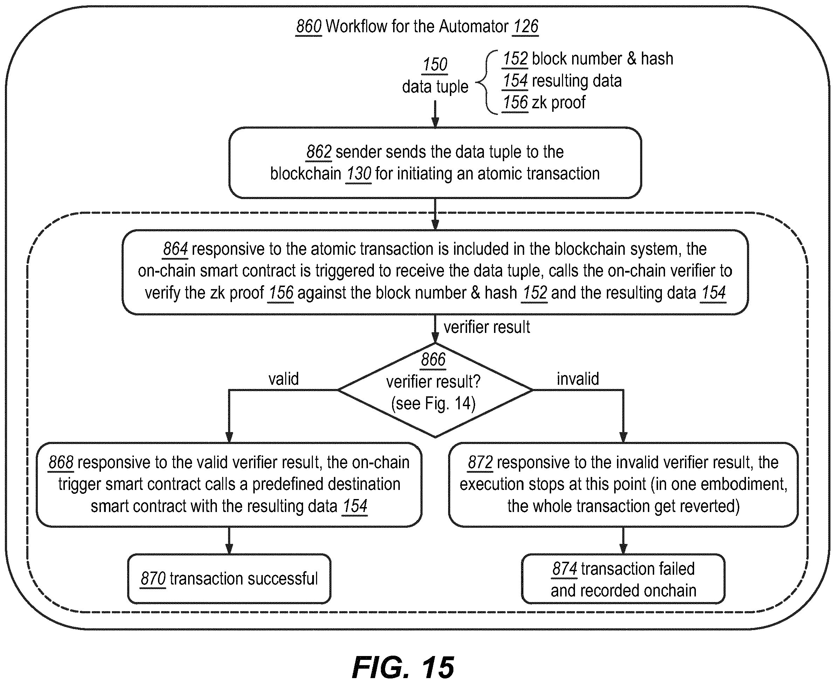

Figure 15 is a block diagram illustrating a process (or workflow) 860 for the automator 126 in the zkOracle system 100. At step 862, a sender sends the data tuple 150 to the blockchain system 130 for initiating an atomic transaction, where the atomic transaction includes the data tuple 150. The data tuple 150 comprises the block number & hash 152, resulting data 154, and/or the zk proof 156. At step 864, responsive to the atomic transaction is included in the blockchain system, the on-chain smart contract is triggered to receive the data tuple 150, and calls the on-chain verifier 122 to verify the zk proof 156 against the block number & hash 152 and the resulting data 154, and then generating a verifier result at the output. At step 866, the automator 126 is configured to receive the verifier result to determine if the verifier result is valid or invalid. For elaboration on the verifier and the verifier result, see the description with respect to Figure 14. Note that the verifier result is a Boolean value, either valid or invalid, or true or false. In a first branch which the verifier result is valid, at step 868, the on-chain trigger smart contract calls a predefined destination smart contract (in one embodiment, which a previous destination smart contract is defined by the developer users of an automator application). After triggering the destination smart contract with the resulting data 154, then the transaction is executed successfully at step 870. In a second branch which the verifier result is valid, at step 872, responsive to the invalid verifier result, the execution stops at this point. The whole transaction gets reverted. At step 874, the whole transaction ended as a failed operation and recorded onchain. Therefore, the automatic 126 is configured to determine that the resulting data triggers a predefined destination smart contract only whether the zk proof is valid.

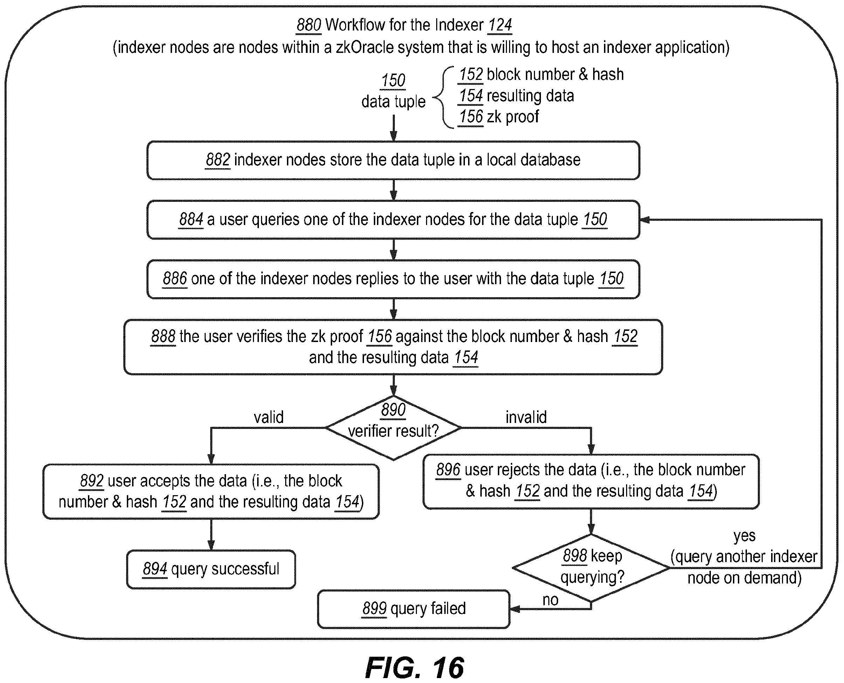

Figure 16 is a block diagram illustrating a process (or workflow) 880 for the indexer 124 in the zkOracle system 100. At step 882, one or more indexer nodes are configured to receive the data tuple 150 and to store the data tuple 150 in a local database. In one embodiment, indexer nodes are nodes within a zkOracle system that are willing to host the indexer application. An indexer is an application of the zkOracle system. Because a zkOracle system itself is designed to be a decentralized network, the zkOracle system itself includes multiple nodes which is operated by different entities. Each node can decide which application(s) to host. The term "indexer nodes" refers the one or more nodes inside the zkOracle system that is willing to host an indexer application. At step 884, a user queries one of the indexer nodes for the data tuple. At step 886, one of the indexer nodes replies to the user with the data tuple 150. At step 888, the user verifies the zk proof 156 against the two types of data, i.e., the block number & hash 152 and the resulting data 154, and generates a verifier result as an output. For more information on the verifier result 154 and a verifier, see the description with respect to Figure 14. At step 890, the verifier 122 is configured to determine whether the verifier result is valid or invalid. If the verifier result is valid, at step 892, the user accepts the data (i.e., the block number & hash 152 and the resulting data 154). The query is deemed successful at step 894. If the verifier result is valid, at step 894, the user rejects the data (i.e., the block number & hash 152 and the resulting data 154). At step 898, the user continues to keep querying for another indexer node on demand, and repeats the process back to step 884.

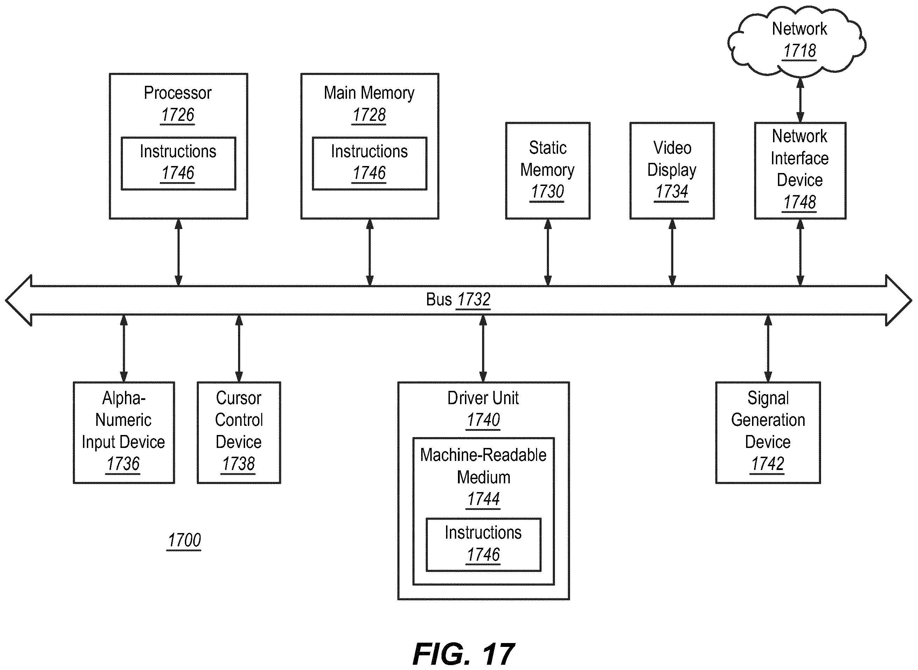

Figure 17 illustrates an exemplary form of a computer system 1700, in which a set of instructions can be executed to cause the computer system to perform any one or more of the methodologies discussed herein. The computer devices 1700 may represent any or all of the clients, servers, or network intermediary devices discussed herein. Further, while only a single machine is illustrated, the term "machine" shall also be taken to include any collection of machines that individually or jointly execute a set (or multiple sets) of instructions to perform any one or more of the methodologies discussed herein. The exemplary computer system 1700 includes a processor 1702 (e.g. a central processing unit (CPU), a graphics processing unit (GPU), or both), a main memory 1704 and a static memory 1706, which communicate with each other via a bus 1708. The computer system 1700 may further include a video display unit 1710 (e.g. a liquid crystal display (LCD)). The computer system 1700 also includes an alphanumeric input device 1712 (e.g. a keyboard), a cursor control device 1714 (e.g. a mouse), a disk drive unit 1716, a signal generation device 1718 (e.g. a speaker), and a network interface device 1724.

The disk drive unit 1716 includes a machine-readable medium 1720 on which is stored one or more sets of instructions (e.g. software 1722) embodying anyone or more of the methodologies or functions described herein. The software 1722 may also reside, completely or at least partially, within the main memory 1704 and/or within the processor 1702. During execution the computer system 1700, the main memory 1704, and the instruction-storing portions of processor 1702 also constitute machine-readable media. The software 1722 may further be transmitted or received over a network 1726 via the network interface device 1724.

While the machine-readable medium 1720 is shown in an exemplary embodiment to be a single medium, the term "machine-readable medium" should be taken to include a single medium or multiple media (e.g. a centralized or distributed database, and/or associated caches and servers) that store the one or more sets of instructions. The term "machine-readable medium" shall also be taken to include any tangible medium that is capable of storing a set of instructions for execution by the machine and that cause the machine to perform anyone or more of the methodologies of the present invention. The term "machine-readable medium" shall accordingly be taken to include, but not be limited to, solid-state memories, and optical and magnetic media.

Some portions of the detailed descriptions herein are presented in terms of algorithms and symbolic representations of operations on data within a computer memory or other storage device. These algorithmic descriptions and representations are the means used by those skilled in the data processing arts to most effectively convey the substance of their work to others skilled in the art. An algorithm is here, and generally, conceived to be a self-consistent sequence of processing blocks leading to a desired result. The processing blocks are those requiring physical manipulations of physical quantities. Throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but not limited to, any type of disk including cloud computing, flash memories, optical disks, magnetic-optical disks, read-only memories (ROMs), random access memories (RAMs), erasable programmable ROMs (EPROMs), electrically erasable and programmable ROMs (EEPROMs), magnetic or optical cards, application specific integrated circuits (ASICs), or any type of media suitable for storing electronic instructions, and each coupled to a computer system bus. Furthermore, the computers and/or other electronic devices referred to in the specification may include a single processor or may be architectures employing multiple processor designs for increased computing capability for artificial intelligence, machine learning, and big data high performance computing.

Moreover, terms such as "request", "client request", "requested object", or "object" may be used interchangeably to mean action(s), object(s), and/or information requested by a client from a network device, such as an intermediary or a server. In addition, the terms "response" or "server response" may be used interchangeably to mean corresponding action(s), object(s) and/or information returned from the network device. Furthermore, the terms "communication" and "client communication" may be used interchangeably to mean the overall process of a client making a request and the network device responding to the request.

In respect of any of the above system, device or apparatus aspects, there may further be provided method aspects comprising steps to carry out the functionality of the system. Additionally or alternatively, optional features may be found based on any one or more of the features described herein with respect to other aspects.

The present disclosure has been described in particular detail with respect to possible embodiments. Those skilled in the art will appreciate that the disclosure may be practiced in other embodiments. The particular naming of the components, capitalization of terms, the attributes, data structures, or any other programming or structural aspect is not mandatory or significant, and the mechanisms that implement the disclosure or its features may have different names, formats, or protocols. The system may be implemented via a combination of hardware and software, as described, or entirely in hardware elements, or entirely in software elements. The particular division of functionality between the various system components described herein is merely exemplary and not mandatory; functions performed by a single system component may instead be performed by multiple components, and functions performed by multiple components may instead be performed by a single component.

In various embodiments, the present disclosure can be implemented as a system or a method for performing the above-described techniques, either singly or in any combination. The combination of any specific features described herein is also provided, even if that combination is not explicitly described. In another embodiment, the present disclosure can be implemented as a computer program product comprising a computer-readable storage medium and computer program code, encoded on the medium, for causing a processor in a computing device or other electronic device to perform the above-described techniques.

As used herein, any reference to "one embodiment" or to "an embodiment" means that a particular feature, structure, or characteristic described in connection with the embodiments is included in at least one embodiment of the disclosure. The appearances of the phrase "in one embodiment" in various places in the specification are not necessarily all referring to the same embodiment.

It should be borne in mind, however, that all of these and similar terms are to be associated with the appropriate physical quantities and are merely convenient labels applied to these quantities. Unless specifically stated otherwise as apparent from the following discussion, it is appreciated that, throughout the description, discussions utilizing terms such as "processing" or "computing" or "calculating" or "displaying" or "determining" or the like refer to the action and processes of a computer system, or similar electronic computing module and/or device, that manipulates and transforms data represented as physical (electronic) quantities within the computer system memories or registers or other such information storage, transmission, or display devices.

Certain aspects of the present disclosure include process steps and instructions described herein in the form of an algorithm. It should be noted that the process steps and instructions of the present disclosure could be embodied in software, firmware, and/or hardware, and, when embodied in software, it can be downloaded to reside on, and operated from, different platforms used by a variety of operating systems.

The algorithms and displays presented herein are not inherently related to any particular computer, virtualized system, or other apparatus. Various general-purpose systems may also be used with programs, in accordance with the teachings herein, or the systems may prove convenient to construct more specialized apparatus needed to perform the required method steps. The required structure for a variety of these systems will be apparent from the description provided herein. In addition, the present disclosure is not described with reference to any particular programming language. It will be appreciated that a variety of programming languages may be used to implement the teachings of the present disclosure as described herein, and any references above to specific languages are provided for disclosure of enablement and best mode of the present disclosure.

In various embodiments, the present disclosure can be implemented as software, hardware, and/or other elements for controlling a computer system, computing device, or other electronic device, or any combination or plurality thereof. Such an electronic device can include, for example, a processor, an input device (such as a keyboard, mouse, touchpad, trackpad, joystick, trackball, microphone, and/or any combination thereof), an output device (such as a screen, speaker, and/or the like), memory, long-term storage (such as magnetic storage, optical storage, and/or the like), and/or network connectivity, according to techniques that are well known in the art. Such an electronic device may be portable or non-portable. Examples of electronic devices that may be used for implementing the disclosure include a mobile phone, personal digital assistant, smartphone, digital watch, kiosk, desktop computer, laptop computer, tablet, consumer electronic device, television, set-top box, or the like. An electronic device for implementing the present disclosure may use an operating system such as, for example, iOS available from Apple Inc. of Cupertino, Calif., Android available from Google Inc. of Mountain View, Calif., Microsoft Windows 11, Windows 11 Enterprise, Windows Server 2022 available from Microsoft Corporation of Redmond, Wash., or any other operating system that is adapted for use on the device. In some embodiments, the electronic device for implementing the present disclosure includes functionality for communication over one or more networks, including for example a cellular telephone network, wireless network, and/or computer network such as the Internet.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "at least one" as used herein is a mathematical term meaning "one or more". For example, the phrase "at least one constraint set" is synonymous as "one or more constraint sets."

The terms "a" or "an," as used herein, are defined as one as or more than one. The term "plurality," as used herein, is defined as two or as more than two. The term "another," as used herein, is defined as at least a second or more.

An ordinary artisan should require no additional explanation in developing the methods and systems described herein but may find some possibly helpful guidance in the preparation of these methods and systems by examining standardized reference works in the relevant art.

While the disclosure has been described with respect to a limited number of embodiments, those skilled in the art, having benefit of the above description, will appreciate that other embodiments may be devised which do not depart from the scope of the present disclosure as described herein. It should be noted that the language used in the specification has been principally selected for readability and instructional purposes, and may not have been selected to delineate or circumscribe the inventive subject matter. The terms used should not be construed to limit the disclosure to the specific embodiments disclosed in the specification and the claims, but the terms should be construed to include all methods and systems that operate under the claims set forth herein below. Accordingly, the disclosure is not limited by the disclosure, but instead its scope is to be determined entirely by the following claims.

## Claims

1. A system, comprising:
a consensus attestation circuit (310) for enforcing a first constraint set between an historical block hash and a newest block hash;
a chain state attestation circuit (320), coupled to the consensus attestation circuit, for enforcing a second constraint set between the newest block hash and block events and states;
a customized computation attestation circuit (330) for enforcing a third constraint set between block events and states and resulting data; and
an aggregation circuit (340), communicatively coupled to the consensus attestation circuit, the chain state attestation circuit, and the customized computation attestation circuit for aggregating a plurality of proofs generated from the consensus attestation circuit, the chain state attestation circuit, and the customized attestation circuit.

2. A method, comprising:
receiving blockchain data;
determining at least one constraint set of the received blockchain data;
generating at least one proof, each proof associated with a constraint set in the at least one constraint set; and
aggregating the one or more proofs into a single proof for processed blockchain data derived from the received blockchain data.

3. A system, comprising:
a state variable attestation circuit (530) for enforcing at least one first constraint set between at least one target event and a block hash, and generating a state subproof;
an event attestation circuit (520) for enforcing at least one second constraint set between at least one state variable and the block hash, and generating an event subproof; and
a transaction attestation circuit (540) for enforcing at least one third constraint set between a target transaction and the block hash, and generating a transaction subproof.

4. The system of claim 3, wherein the state variable attestation circuit, the event attestation circuit, and the transaction attestation circuit generate a chain state proof, the chain state proof including the event subproof, the state subproof, and the transaction proof.

5. The system of claim 3, wherein each of the state variable attestation circuit, the event attestation circuit and the transaction attestation circuit comprises a hash subcircuit and a Merkle Patricia Trie (MPT) verify subcircuit, the hash subcircuit adjusted to set at least one constraint between a block hash and a root, i.e. state root, receipt root or transaction root. , the MPT verify subcircuit adapted to set at least one constraint between a root, a MPT proof, and a target data.

6. The system of claim 3, wherein:
the event circuit (520) is configured to receive inputs of the receipts root (581) and the raw receipts data (582),
the state circuit (530) is configured to receive inputs of the state root (583) and the state path proof (584), and
the transaction circuit (540) is configured to receive inputs of the transaction root (585), and the raw transaction data (586).

7. The system of claim 3, wherein each respective output from the event circuit (502), the state circuit (530), and the transaction circuit (540) is sent to a chain state proof (560); and wherein the chain state proof receives three subproofs: an event proof (561) from the event circuit (520), a state proof (562) from the state circuit (530), and a transaction proof (563) from the transaction circuit (540).

8. The system of 3, wherein the system comprises a zero-knowledge system.

9. A zero-knowledge method, comprising:
translating a plurality of publicly known algorithms to a circuit, the circuit having a plurality of constraint sets; and
establishing a constraint set in the plurality of constraint sets for each algorithm in the publicly known algorithms.

10. A customized computation attestation prover method in a zkOracle system, comprising:
receiving at least one customized computation code and a sequence of inputs;
decoding and transforming the at least one customized computation code to assemble at least one customized circuit; and
processing the sequence of inputs through the at least one customized circuit to generate a customized proof.

11. The method of claim 10, wherein the receiving the sequence of inputs comprises at least public input and at least one witness input.

12. The method of claim 10, wherein the decoding and transforming step comprises a multi-stage solution having a setup stage and a prove stage.

13. The method of claim 12, wherein the setup stage comprises the zkOracle system decoding the customized computation codes and transforming the customized computation codes into at least one preprocess circuit.

14. The method of claim 12, wherein the prove stage comprises the zkOracle system processing in the execution trace of the customized computation code against the public inputs and witness inputs, and then generating at least one circuit.

15. The method of claim 14, wherein the zkOracle system generates at least one proof based on the circuits from the setup stage and the prove stage.

16. An on-chain verification method for verifying a zk proof against inputs, comprising:
receiving on-chain data, derived data, and a zk proof for the on-chain data and the derived data; and
verifying the zk proof against the on-chain data and derived data, thereby generating an output result indicating whether the on-chain data and derived data are valid or invalid.

17. The method of claim 16, wherein the verifying step comprises accessing a blockchain node for (a) verifying at least one block hash associated with the on-chain data is valid and (b) executing an on-chain verification program for verifying the block hash and the derived data.

18. An off-chain attestation verification method for verifying a zk proof against inputs, comprising:
receiving a genesis block, on-chain data, derived data, and a zk proof for the on-chain data and the derived data; and
verifying the zk proof against the genesis block, the on-chain data, and the derived data, thereby generating an output result indicating whether the on-chain data and derived data are consistent with the genesis block and a predefined computation code.

19. The method of claim 18, wherein the verifying step comprises an off-chain verification without accessing a blockchain node, for (a) verifying at least one block hash by determining whether the block hash is consistent with the genesis block, and (b) verifying the on-chain data and the derived data are consistent with at least one valid block hash.

20. The method of claim 18, wherein the off-chain attestation verification comprises verifying by one of the following means: a portable computer, a mobile device, or a browser.
